# EUROPÄISCHE PATENTSCHRIFT

(11) **EP 1 407 649 B1**
(45) Veröffentlichungstag und Bekanntmachung des Hinweises auf die Patenterteilung: **19.11.2008**
(21) Anmeldenummer: 03103718.7
(22) Anmeldetag: 07.10.2003
(51) Int. Cl.: A01B 35/22

(54) **Aufsteckanordnung für ein Bodenbearbeitungswerkzeug**
Mount-up arrangement for soil working tool
Arrangement de surmontage pour outil de travail du sol

(30) Priorität: 10.10.2002 US 268581
(43) Veröffentlichungstag der Anmeldung: 14.04.2004
(73) Patentinhaber: DEERE & COMPANY, Moline, Illinois 61265-8098 (US)
(72) Erfinder: Poutré, Benoit Jocelyn, 50073, Elkhart (US); Hook, Richard Wayne, 50265, West Des Moines (US); Noonan, James Thomas, 50131, Johnston (US); Peck, Donald Ray, 50325, Clive (US); Egert, Michael Sieben, 50226, Polk City (US)
(74) Vertreter: Holst, Sönke

(56) Entgegenhaltungen:
- GB-A- 2 211 059
- US-A- 2 757 595
- US-A- 3 061 021
- US-A- 4 799 555
- US-B1- 6 315 058

## Beschreibung

Die Erfindung betrifft eine Aufsteckanordnung für ein Bodenbearbeitungswerkzeug, insbesondere für ein Schar, mit einer Halteeinrichtung für das Bodenbearbeitungswerkzeug, einem an die Halteeinrichtung anbringbaren Haltebereich für das Bodenbearbeitungswerkzeug, wobei die Halteeinrichtung einen festen aber lösbaren Sitz bietet, wenn sich der Haltebereich in einer montierten Position an der Halteeinrichtung befindet und die montierte Position, in der der Haltebereich montiert ist, aufgrund von Toleranzen an der Halteeinrichtung und am Haltebereich variieren kann, und mit einer Fixierungsanordnung, um ein Loslösen des Haltebereichs von der Halteeinrichtung zu vermeiden, die ein vorgespanntes Halteelement aufweist.

Standardanordnungen für Anbaugeräte, wie z.B. Tiefgrubber und Feldgrubber, enthalten üblicherweise eine gefederte Schaftanordnung, welche sich nach unten hin in einen werkzeugaufnehmenden Endbereich erstreckt, an den eine Schaufel, Spitze oder ein Schar montiert ist. Es sind Montageanordnungen bekannt, die Bolzen enthalten, welche sich durch Bohrungen im Werkzeug und im Schaft erstrecken, um das Werkzeug zu befestigen. Wenn das Werkzeug in derartigen Anordnungen wegen Verschleiß oder Beschädigung ausgetauscht werden muss, müssen die Bolzen entfernt werden. Verschleiß und Korrosion der Bolzen erschweren im erheblichen Maße das Entfernen der Bolzen und gestalten den Austausch des Werkzeugs sehr schwierig und zeitintensiv.

Verschiedene Lösungen für einfaches und schnelles Austauschen von Verschleißteilen, wie z. B. von an Schäften montierten Scharen, wurden in den vergangenen Jahren in Form von Halteeinrichtungen erarbeitet. Dazu gehören Anschlussträger, die selbsthemmende Passungen mit an Aufsteckscharen angepassten Konussen aufweisen, und zerbrechbare Anschlussbolzen. Die meisten Halteeinrichtungen sind mit Problemen behaftet, wie z. B., dass zusätzliche Teile erforderlich sind, oder dass ein Scharverlust eintritt, wenn hohe Kräfte während des Transports oder beim Herausziehen des Schars aus einer Eingriffsstellung auftreten. Um Vorfällen, wie dem Abfallen der Schare von Schäften bei Schnellmontageanordnungen vorzubeugen, haben verschiedene Hersteller Rastmechanismen angeboten, wie z. B. einen Halteklipp, der in Form eines gestanzten Stahlblechteils ausgebildet ist und eine sphärische Erhebung aufweist, welche in eine Rastbohrung an dem Schar eingreift. Um das Schar zu lösen, kann ein Schraubendreher oder ein anderes Werkzeug eingesetzt werden, mit dem der Halteklipp heruntergedrückt und die Erhebung aus der Bohrung herausbewegt wird. Andere Rasteinrichtungen sind beispielsweise in der US 3,061,021 A und der US 6,289,996 B1 offenbart. Derartige Rasteinrichtungen helfen im Allgemeinen die Schare an den Schäften zu halten, aber die Kräfte, die auf das Schar einwirken, insbesondere Kräfte, die auf Tiefgrubber einwirken, können so groß sein, dass das Schar nicht auf dem Schaft hält. Durch die Ausgestaltung der meisten bisher erhältlichen Rasteinrichtungen für ein Schar, insbesondere durch nicht symmetrisch ausgebildete Berührungsflächen an einigen Rasteinrichtungen, ist üblicherweise das Eingreifvermögen einer Rastfläche in eine Bohrung begrenzt, so dass auch die Haltekräfte begrenzt sind. Einige Sorgfalt muss geboten werden, um die Erhebung mit der Bohrung auszurichten, da Bauteiltoleranzen, Unterschiede bei den für die Montage des Schars anzuwendenden Montagekräften oder auch eine mangelhafte Ausrichtung des Halteklipps relativ zum Schaft ein derartiges Ausrichten problematisch gestalten können. Auch wird durch eine relativ kleine, abgeschrägte Kontaktfläche zwischen dem Halteklipp und der Bohrung die Wahrscheinlichkeit für einen Verlust der Schar größer. An dem Haltebereich des Schars sich auftürmender und um diesen sich herum bewegender Ackerboden kann den Halteklipp aus der Rastposition lösen oder derart verschleißen, dass dieser zum Halten des Schars im Schaft untauglich geworden ist. Extreme Kräfte an der Rastvorrichtung, wie z. B. Kräfte, die während eines Ausfederungsvorgangs auftreten können, können ebenfalls Deformationen der Rasteinrichtung hervorrufen. Wenn die Rasteinrichtung deformiert ist, können locker sitzende Schare am Schaft auf unannehmbare Weise schlenkern oder verloren gehen. Eine robuste Bauweise der Rasteinrichtung oder häufiges Auswechseln sind daher üblicherweise erforderlich.

In der US 6,585,058 B2 wird eine Scharanordnung offenbart, welche eine aus Federdrahtmaterial ausgebildete Rasteinrichtung enthält, die in einer auf der Unterseite eines keilförmigen Trägerelements eingebrachten Nut gehalten wird und mit dem Haltebereich des Schars in Eingriff steht. Das Ende des Drahtes ist gegen einen Kontaktbereich an der oberen Kante einer Öffnung im Haltebereich vorgespannt, um ein Herausrutschen des Schars aus einer verkeilten Montageposition zu verhindern. Zum Entfernen des Schars wird ein Werkzeug durch die Öffnung geführt, um das Ende der Rasteinrichtung herunterzudrücken, und das Schar in Abwärtsrichtung aus dem Trägerteil herausbewegt. Ein bekanntes Problem bei Rasteinrichtungen für Schare ist, dass die meisten Rasteinrichtungen eine festgelegte Einrastposition aufweisen. Fertigungstoleranzen für das Schar und für das Trägerelement können dann sowohl zu einem zu lockeren als auch zu einem zu engen Keilsitz in der Einrastposition führen. Wenn der Keilsitz zwischen dem Schar und dem Trägerelement zu locker ist, muss die gesamte Haltekraft im Wesentlichen von der Rasteinrichtung aufgebracht werden. Ist der Keilsitz zu eng, kann das Schar nicht vollständig in die Einrastposition gebracht und während eines Transportvorgangs oder am Ende eines Ausfederungsvorgangs des Schaftes verloren gehen. Die notwendigen Fertigungstoleranzen für eine bessere Anpassung zu liefern, würde die Kosten für die Anordnung zu hoch ausfallen lassen. Oftmals muss eine Bedienperson mittels eines Hammers oder eines anderen Werkzeugs sehr hohe Fügekräfte am Schar anwenden, um einen festgekeilten Sitz zu erwirken oder um sicherzustellen, dass das Schar die Einrastposition erreicht.

Die der Erfindung zu Grunde liegende Aufgabe wird darin gesehen, eine Aufsteckanordnung der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Aufsteckanordnung der eingangs genannten Art mit einem Haltebereich versehen, an dem mehrere beabstandete Kontaktflächen ausgebildet sind, und das Halteelement derart ausgebildet, dass es in Richtung der Kontaktflächen vorgespannt ist und mit einer der Kontaktflächen in Abhängigkeit von der jeweiligen Position, in der der Haltebereich montiert ist, in Eingriff treten kann.

Die Fixierungsanordnung enthält ein Halteelement mit einem Kontaktendbereich, welcher gegen das Bodenbearbeitungswerkzeug vorgespannt ist. Das Bodenbearbeitungswerkzeug enthält den Kontaktendbereich aufnehmende beabstandete Kontaktflächen, wobei zwei oder mehr vorgesehen sind, um sich Fertigungstoleranzen anpassen zu können und eine Montage von Hand zu vereinfachen.

In einer bevorzugten Ausführungsform ist das Halteelement als ein aus Federstahl gefertigter Draht ausgebildet, welches einen Kontaktendbereich enthält, der gegen die Unterseite des Bodenbearbeitungswerkzeugs vorgespannt ist. Die Unterseite des Bodenbearbeitungswerkzeugs enthält eine Reihe von abgestuften Kontaktflächen um eine Rastfunktion zu bieten.

Sobald das Bodenbearbeitungswerkzeug auf den Adapter bzw. auf die Halteeinrichtung am Schaft geschoben wird, federt der Kontaktendbereich in eine erste Haltestellung in die abgestuften Kontaktflächen, welche zu dem Kontaktendbereich ausgerichtet sind. In der ersten Haltestellung wird das Bodenbearbeitungswerkzeug am Schaft gehalten, ohne dass die Notwendigkeit besteht, das Bearbeitungswerkzeug fest auf die Halteeinrichtung zu schieben. Das Aufschieben kann von Hand ohne Zuhilfenahme von Werkzeug erfolgen. Die Kraft, die während der Einleitung eines normalen Bodeneingriffs auf das Bodenbearbeitungswerkzeug angewendet wird, bewegt das Bodenbearbeitungswerkzeug in eine verkeilte Halteposition und bewirkt einen Selbst-Einrastvorgang des Halteelements. Wenn die Fertigungstoleranzen sich derart auswirken, dass das Bodenbearbeitungswerkzeug sich an dem Schaft bis hinter eine mittlere Stellung aufwärtsbewegt, dann tritt der Kontaktendbereich mit einer näher an der Spitze des Bodenbearbeitungswerkzeugs gelegenen Kontaktfläche in Eingriff. Wenn die Fertigungstoleranzen sich derart auswirken, dass ein engerer Sitz vorliegt, so dass das Bodenbearbeitungswerkzeug sich nicht so weit an dem Schaft aufwärtsbewegt, dann gerät eine näher am oberen Ende des Bearbeitungswerkzeugs gelegene Kontaktfläche in Eingriff.

In vorteilhafter Weise wird eine Fixierungsanordnung für ein Bearbeitungswerkzeug geschaffen, welches einfach und kostengünstig herstellbar und zusammenbaubar ist, das Bearbeitungswerkzeug zuverlässig am Schaft hält und ein schnelles und einfaches Aufstecken und Abbauen des Bodenbearbeitungswerkzeugs ermöglicht. Des Weiteren wird ein zuverlässiger Halt des Bodenbearbeitungswerkzeugs geboten, unabhängig von Fertigungstoleranzen. Der Aufsteckvorgang wird vereinfacht und eine zuverlässigere Anbindung des Bodenbearbeitungswerkzeugs unter Aufbringung kleinerer Montagekräfte beim Aufsteckvorgang wird ermöglicht, so dass das Aufstecken des Bodenbearbeitungswerkzeugs von Hand geschehen kann.

Um das Bearbeitungswerkzeug zu entfernen, wird vorzugsweise ein Werkzeug eingesetzt, um auf das Halteelement einzuwirken und dieses herunterzudrücken. In einer bevorzugten Ausführungsform kann mit dem Werkzeug hinter den Haltebereich des Bearbeitungswerkzeugs eingegriffen werden, so dass eine Öffnung am Bearbeitungswerkzeug neben dem Halteelement vorgesehen ist, um den Eingriff auf das Halteelement zu vereinfachen und die Lebensdauer zu verlängern.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Seitenansicht, teilweise in Schnittdarstellung, einer Schaftanordnung mit einem Schar und einer Fixierungsanordnung für ein Schar,
- Fig. 2: eine perspektivische Draufsicht eines Bereiches der Schaftanordnung aus Figur 1, in der eine Eingreifstelle für ein Demontagewerkzeug zwischen Schar und einer Halteeinrichtung gezeigt ist,
- Fig. 3: eine perspektivische Seitenansicht eines mit Stufen versehenen Kontaktbereichs für ein Halteelement des Schars aus Figur 1 und Figur 2, wobei das Halteelement sich relativ zu dem Kontaktbereich in einer Anfangs-Aufsteckstellung befindet,
- Fig. 4: eine Ansicht, ähnlich zu der in Figur 4 dargestellten Ansicht, wobei sich das Haltelement in einer Stellung befindet, in der eine Keilwirkung bei relativ hoch eingeschobenem Schar eintritt,
- Fig. 5: eine Frontansicht eines Schars ohne Öffnung im Montageschaft des Schars,
- Fig. 6: eine perspektivische Vorderansicht des unteren Bereichs der Schaftanordnung und

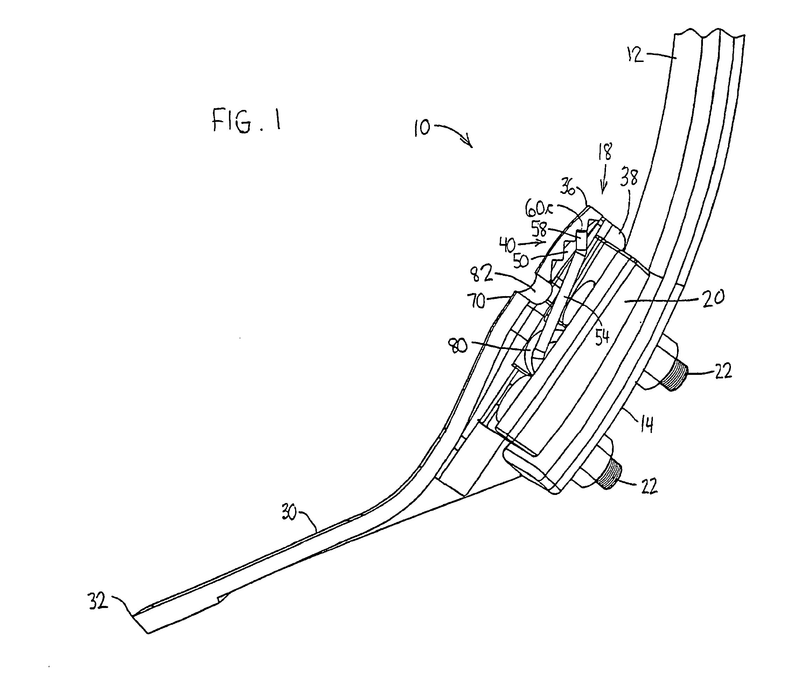

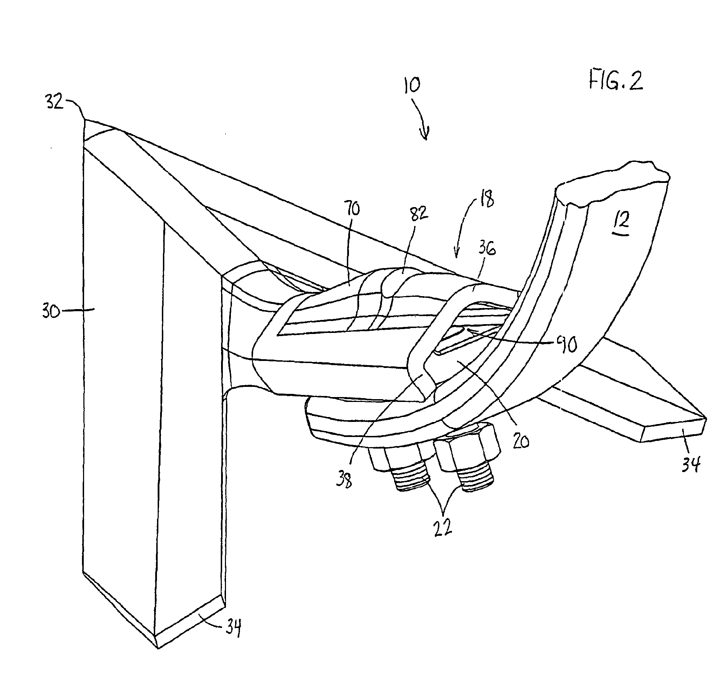

In Figur 1 ist der untere Bereich einer gefederten Schaftanordnung 10 dargestellt, welcher einen Schaft 12 und einen unteren Endbereich 14 zur Werkzeugmontage enthält, mit dem eine Aufsteck-Scharanordnung 18 gehalten wird. Die Scharanordnung 18 enthält eine keilförmig ausgebildete Adapterhalterung oder Halteeinrichtung 20 für eine Schar, mit einer an die vordere Fläche des Endbereichs 14 angepassten hintere Fläche. Die Halteeinrichtung 20 ist mittels zwei Befestigungsbolzen 22, welche sich durch Öffnungen in der Halteeinrichtung 20 und entsprechenden Öffnungen im Endbereich 14 des Schaftes 12 erstrecken, an den Endbereich 14 gesichert. Ein Bodenbearbeitungswerkzeug 30, in den Figuren 1 und 2 als Bodenbearbeitungsschar dargestellt, enthält eine nach vorn gerichtete Spitze 32 und gegenüberliegend angeordnete Flügelbereiche 34, welche in Rückwärtsrichtung auseinander divergieren. Ein nach unten und nach hinten konkav ausgebildeter Scharmontagebereich oder Haltebereich 36 enthält Kanten 38, welche teilweise die Halteeinrichtung 20 umgreifen.

Der Haltebereich 36 liefert einen keilförmigen Sitz zwischen dem Schar 30 und dem Endbereich 14 des Schafts 12, wenn das Schar 30 aufwärts auf die Halteeinrichtung 20 geschoben wird. Der Haltebereich 36 wird aufwärts über die Halteeinrichtung 20 geschoben, und dann das Schar 30 nach oben und nach hinten gedrückt, um das Schar 30 in einer montierten Position auf dem Schaft 12 zu verkeilen. Auch wenn die Halteeinrichtung 20 als ein separates einkeilendes Halteelement gezeigt ist, können auch andere Arten von Halteelementen eingesetzt werden, welche ohne Klemmwirkung, mit teilweiser Klemmwirkung oder mit zerbrechbaren Verbindungen eine Halteeinrichtung 20 zur Verbindung von zwei Bauteilen darstellen.

Das Schar 30 wird von dem Haltebereich 36 und der Halteeinrichtung 20 am Endbereich 14 festgehalten, ohne dass eine direkte Verbindung von Montagebolzen mit dem Schar 30 erforderlich ist. Da keine Montagebolzen für das Schar 30 enthalten sind, können die Schare 30 schnell von der Halteeinrichtung 20 entfernt und leicht ersetzt werden. Trotzdem kann sich durch Ausfederungskräfte und dergleichen der Keilsitz während Arbeiten auf dem Feld lösen. Das Schar 30 kann auch während eines Transports verloren gehen, insbesondere wenn es vor einer Bodenbearbeitung noch nicht fest verkeilt wurde. Um einen Verlust des Bodenbearbeitungsgerätes 30 zu vermeiden, wenn der Keilsitz während der Feldarbeit oder während des Transports gelöst ist, ist eine Fixierungsanordnung 40 vorgesehen. Die normalen Kräfte, die auf ein Bodenbearbeitungsgerät 30 einwirken, welches sich im Bodeneingriff befindet, neigen dazu, das Bodenbearbeitungsgerät 30 zurück in den Keilsitz oder in die Montageposition zu drängen, wenn das Bodenbearbeitungsgerät 30 noch in der Halteeinrichtung 20 nach dem ungewollten Lösen gehalten werden kann.

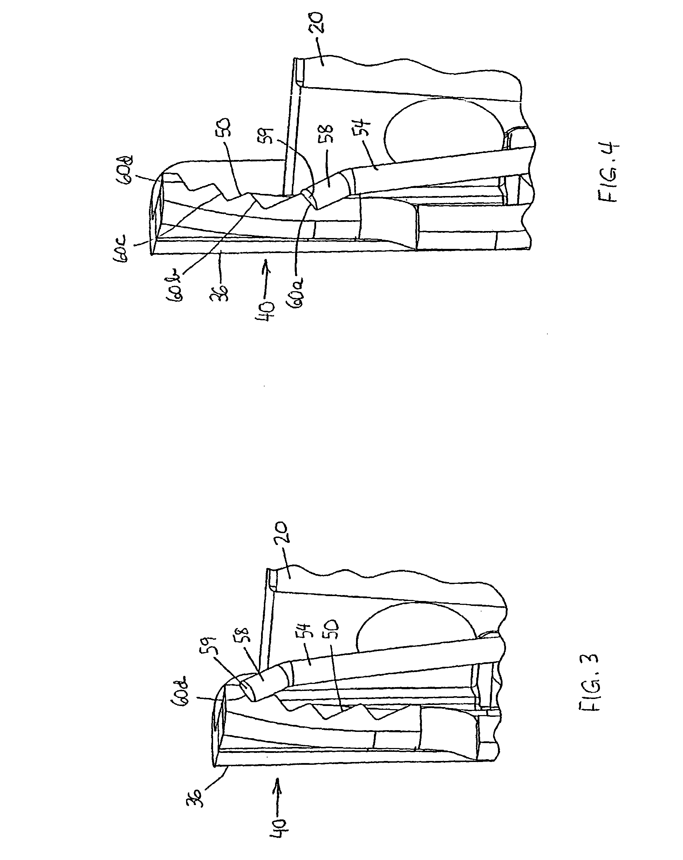

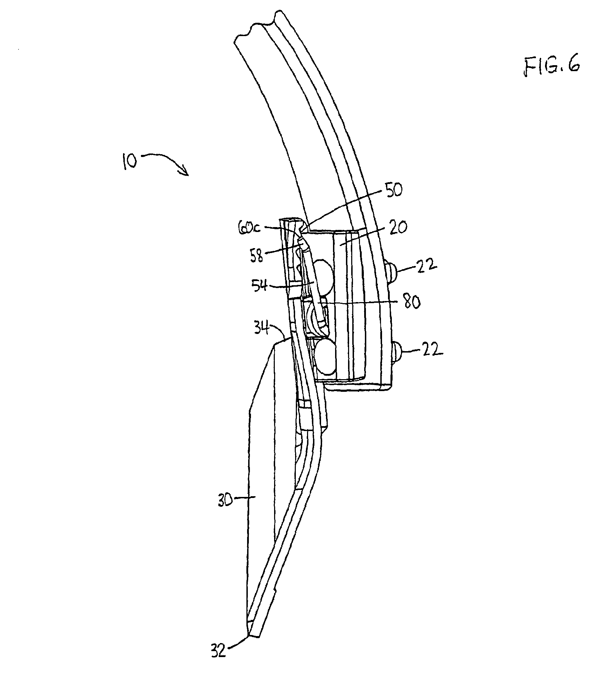

Die Fixierungsanordnung 40 für das Bodenbearbeitungsgerät 30 enthält einen länglichen Kontaktbereich 50, welcher an der Unterseite des oberen Haltebereichs 36 des Schars 30 oder am Befestigungsbereich positioniert ist. Ein Halteelement 54 wird von der Halteeinrichtung 20 getragen und enthält einen Kontaktbereich 58, welcher in Vorwärtsrichtung abgewinkelt ist und über der Oberfläche oder vorderen Fläche der Halteeinrichtung 20 liegt. Der Kontaktendbereich 58 enthält eine abgeflachte Kontaktfläche 59 und ist gegenüber der Unterseite des Haltebereichs 36 vorgespannt. In einer Verlustsicherungsstellung, wenn sich das Schar 30 in einer montierten Position befindet, oder in einer Anfangs-Aufsteckstellung (siehe Figur 3), stößt oder liegt der Endbereich 58 dicht an einer von mehreren beabstandeten, abgeflachten Kontaktflächen 60a, 60b, 60c und 60d an. Wie in Figur 1 und 6 dargestellt ist, stößt der Endbereich 58 an eine mittige Kontaktfläche 60c. Wenn die gegebenen Toleranzen zwischen dem Haltebereich 36 und der Halteeinrichtung 20 derart ausgebildet sind, dass sich ein festerer Sitz einstellt und sich das Bodenbearbeitungsgerät 30 früher in der montierten Position auf dem Schaft 12 verkeilt (nahe der Anfangs-Aufsteckstellung aus Figur 3), dann wird der Endbereich 58 von einer Kontaktfläche 60d, die oberhalb der mittleren Kontaktfläche 60c liegt, in eine Halteposition gezwungen. Wenn die Toleranzen derart ausgebildet sind, dass der Sitz lockerer ist, dann wird das Schar 30 in eine höhere Position relativ zum Schaft 12 gebracht, so dass eine Kontaktfläche 60a (siehe Figur 4) unterhalb der Kontaktfläche 60c den Endbereich 58 zur Halterung des Schafts 12 aufnimmt. Die Oberflächen der Kontaktfläche 60c und der Kontaktfläche 59 sind im Wesentlichen parallel zueinander ausgerichtet, wenn sie in Kontakt treten. Der Kontakt bewahrt das Schar 30, aus der montierten Position wesentlich herausbewegt werden zu können, bis der Endbereich 58 in Richtung der Halteeinrichtung 20 entgegen der Vorspannung bewegt wird.

Der Haltebereich 36 des Schars 30 enthält einen erhöhten Bereich 70, an dessen Unterseite ein abgedeckter nutförmiger Bereich definiert ist, in welchem das Halteelement 54 geführt und gehalten wird. Die Unterseite des erhöhten Bereichs 70 ist nach unten hin und in Rückwärtsrichtung konkav ausgebildet und in Rückwärtsrichtung zur Halteeinrichtung 20 geöffnet. Die Kontaktflächen 60a bis 60d sind an der Unterseite des Bereichs 70 ausgebildet und definieren mehrere zueinander beabstandete und in eine Richtung verriegelnde Stellungen. Wie in Figur 1, 3 und 4 gezeigt ist, ist der Kontaktbereich 50 abgestuft, um die Kontaktflächen 60a bis 60d in einer abgedeckten Aussparung zu definieren, so dass Ackerboden und Verunreinigungen nicht in den Kontaktbereich 50 geraten und sich während Feldarbeiten dort anhäufen.

Sobald das Schar 30 in eine Anfangs-Aufsteckstellung auf die Halteeinrichtung 20 geschoben wird, wird das Halteelement 54 heruntergedrückt und bewegt sich in den Bereich der Kontaktfläche 60d, um das Schar 30 locker in einer nichtverkeilten Anfangsstellung in der Halteeinrichtung 20 zu halten. Wenn das Schar 30 in den Ackerboden geführt wird, zwingen die auf das Schar 30 einwirkenden Kräfte das Schar in einen verkeilten Verriegelungssitz in der Halteeinrichtung 20. Während dieser Aufwärtsbewegung, springt das Halteelement 54 und damit der Endbereich 58 in die nächstgelegene Vertiefung, wenn jede Erhöhung des abgestuften Kontaktbereichs 50 den Endbereich 58 passiert. Das Halteelement 54 liefert die Haltefunktion entgegen einer der entsprechenden Kontaktflächen 60a bis 60d, sobald das Schar 30 beginnt, sich aus der montierten Position herauszubewegen.

Die oben beschriebenen Fixierungsanordnungen bieten eine in eine Richtung wirkende oder rastartige Sicherungsvorkehrung mit mehreren Halterungspositionen, so dass sich die Stützposition nahe der montierten Position einstellen kann und unabhängig von den Toleranzen der Bauteile Relativbewegungen zwischen dem Schar 30 und der Halteeinrichtung 20 gering gehalten werden, wenn das Schar sich aus der vollständig montierten, verkeilten Position herausbewegt. Der Fixierungsanordnung 40 erlaubt ein einfaches handbetätigtes Aufsetzen und Halten des Schars, bis die Bodenbearbeitungskräfte das Schar 30 in eine verkeilte montierte Position bringen.

Wie in den Figuren 1, 3, 4 und 6 gezeigt ist, ist das Halteelement 54 als ein gebogener Federdraht ausgebildet, der in einem Bereich 80 an einer zentralen Stelle der Halteeinrichtung 20 gelagert ist. Sobald das Schar 30 in Aufwärtsrichtung und Rückwärtsrichtung in die Halteeinrichtung 20 gesteckt wird, federt der Endbereich 58 in die nutförmige Unterseite des Bereichs 70 hinein. Wenn das Schar 30 beginnt, sich abwärts aus der verkeilten Position herauszubewegen, dann hält der Kontakt zwischen der Kontaktfläche 59 des Endbereichs 58 und der entsprechenden Kontaktfläche 60a bis 60d das Schar 30 nahe der vollständig verkeilten Position, bis die Bodenkräfte bei der Bodenbearbeitung, das Schar 30 wieder in eine verkeilte Montageposition bringen. Die nutförmige Unterseite des Bereichs 70 hält des Weiteren den Endbereich 58 des Haltelements 54 im Wesentlichen fluchtgerecht zur Drahtachse, um Biegemomente am Haltelement 54 zu vermeiden, die andernfalls auftreten würden, wenn starke Lösekräfte auf das Schar wirken, wie z. B. Ausfederungskräfte, die eine Zugwirkung auf das Schar 30 ausüben. Der gegenüberliegende erhobene Bereich auf der Oberseite des Schars 30 leitet Ackerboden außerhalb um die Fixierungsanordnung 40 herum, um in diesem Bereich eine Verschleißwirkung zu begrenzen.

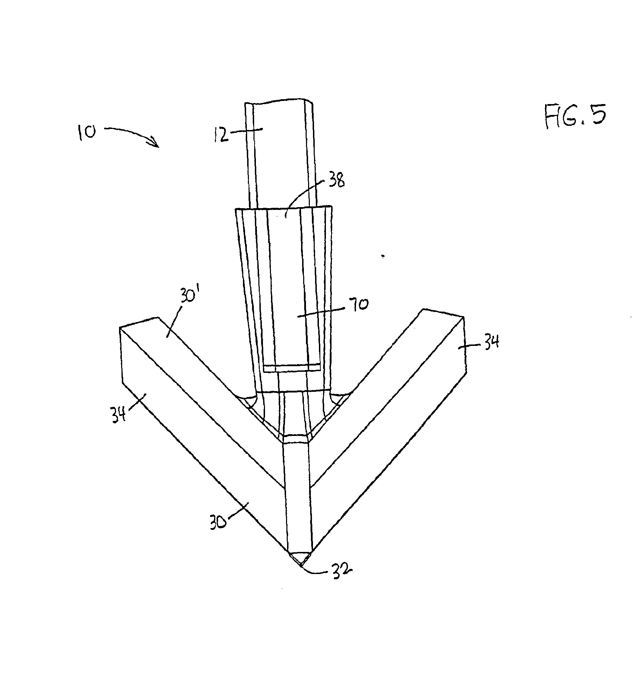

Um das Schar 30 herauszulösen, kann ein Werkzeug in eine Öffnung 82 im Haltebereich 36 eingeführt werden, um das Haltelement 54 nach unten, aus einer Stützstellung mit den Kontaktflächen 60a bis 60d herauszubewegen. Bei heruntergedrücktem Halteelement 54, kann das Schar 30 mit einem gezielten Hammerschlag, oder mit einer anderen durch ein Trennwerkzeug hervorgerufenen abwärtsgerichteten Kraft, aus der verkeilten montierten Position an der Halteeinrichtung 20 herausgelöst werden. In dem in Figur 5 gezeigten Ausführungsbeispiel ist keine Öffnung im Schaft 36 vorgesehen und ein Werkzeug zum Herunterdrücken des Halteelements 54 wird in einer angepassten Aushöhlung 90 (siehe Figur 2) hinter dem Schaft 36 eingeführt, um an einem mittleren Bereich des Halteelements 54 anzugreifen. Das Werkzeug kann dann verdreht werden, um das Halteelement 54 aus einer Halteverbindung für das Schar 30 mit der Unterseite des Haltebereichs 36 herauszuzwingen. Das Entfernen der Öffnung im Haltebereich 36 reduziert die Ansammlung von Verunreinigungen und den Verschleiß im Bereich der Halteeinrichtung 20.

## Patentansprüche

1. Aufsteckanordnung für ein Bodenbearbeitungswerkzeug (30), insbesondere für ein Schar, mit einer Halteeinrichtung (20) für das Bodenbearbeitungswerkzeug (30), einem an die Halteeinrichtung (20) anbringbaren Haltebereich (36) für das Bodenbearbeitungswerkzeug (30), wobei die Halteeinrichtung (20) einen festen aber lösbaren Sitz bietet, wenn sich der Haltebereich (36) in einer montierten Position an der Halteeinrichtung (20) befindet und die montierte Position, in der der Haltebereich (36) montiert ist, aufgrund von Toleranzen an der Halteeinrichtung (20) und am Haltebereich (36) variieren kann, und mit einer Fixierungsanordnung (40), um ein Loslösen des Haltebereichs (36) von der Halteeinrichtung (20) zu vermeiden, die ein vorgespanntes Halteelement (54) aufweist, **dadurch gekennzeichnet, dass** am Haltebereich (36) mehrere beabstandete Kontaktflächen (60a - 60d) ausgebildet sind, und dass das Halteelement (54) in Richtung der Kontaktflächen (60a - 60d) vorgespannt ist und mit einer der Kontaktflächen (60a - 60d) in Abhängigkeit von der jeweiligen Position, in der der Haltebereich (36) montiert ist, in Eingriff treten kann.

2. Aufsteckanordnung nach Anspruch 1, **dadurch gekennzeichnet, dass** die Halteeinrichtung (20) eine Vorderseite enthält, welche einem rückwärtigen Bereich (50) des Haltebereichs (36) zugewandt ist und das Halteelement (54) gegen den rückwärtigen Bereich (50) vorgespannt ist.

3. Aufsteckanordnung nach Anspruch 2, **dadurch gekennzeichnet, dass** die Kontaktflächen (60a - 60d) mit dem rückwärtigen Bereich (50) des Haltebereichs (36) einteilig sind.

4. Aufsteckanordnung nach einem der vorhergehenden Ansprüche, **dadurch gekennzeichnet, dass** der Haltebereich (36) eine Form aufweist, mit der ein Keilsitz zwischen dem Haltebereich (36) und der Halteeinrichtung (20) ausgebildet wird, wobei die Kontaktflächen (60a - 60d) eine vorläufige Kontaktfläche (60d) enthalten, um das Bodenbearbeitungswerkzeug (30) in der Halteeinrichtung (20) in einer vorübergehenden, von der montierten Position versetzten, Anfangs-Aufsteckposition zu halten, wobei Kräfte, die auf das Bodenbearbeitungswerkzeug (30) während der Feldarbeit einwirken, das Bodenbearbeitungswerkzeug (30) aus der Anfangs-Aufsteckposition in einen verkeilten Zustand bringen, so dass die Montage des Bodenbearbeitungswerkzeugs (30) unabhängig von dem Einsatz von Montagewerkzeugen durchführbar ist.

5. Aufsteckanordnung nach einem der vorhergehenden Ansprüche, **dadurch gekennzeichnet, dass** die Halteeinrichtung (20) und der Haltebereich (36) einen Einführbereich (82, 90) zum Einführen eines Werkzeugs zwischen Halteeinrichtung (20) und Haltebereich (36) definieren, um das Haltelement (54) gegen die Vorspannung zu drücken und das Bodenbearbeitungswerkzeug (30) aus der montierten Position zu lösen.

6. Aufsteckanordnung nach einem der vorhergehenden Ansprüche, **dadurch gekennzeichnet, dass** der Haltebereich (36) einen erhöhten Bereich (70) enthält, der in Richtung der Bodeneindringseite des Bodenbearbeitungswerkzeugs (30) hinter den Kontaktflächen (60a - 60d) ausgebildet ist, um den Verschleiß im Bereich der Kontaktflächen (60a - 60d) zu begrenzen.

7. Aufsteckanordnung nach einem der vorhergehenden Ansprüche 2 bis 7, **dadurch gekennzeichnet, dass** der rückwärtige Bereich (50) einen verdeckten Nutbereich enthält, welcher dem Halteelement (54) gegenüber liegt und in welchem die Kontaktflächen (60a - 60d) ausgebildet sind.

## Claims

1. Plug-on arrangement for a soil-working tool (30), in particular for a share, having a retaining device (20) for the soil-working tool (30), having a retaining region (36) which can be fitted onto the retaining device (20) and is intended for the soil-working tool (30), it being the case that the retaining device (20) provides for a firm but releasable fit when the retaining region (36) is located in an installed position on the retaining device (20) and the installed position, in which the retaining region (36) is installed, can vary on account of tolerances on the retaining device (20) and on the retaining region (36), and having a fixing arrangement (40) in order to avoid the retaining region (36) coming loose from the retaining device (20), which has a prestressed retaining element (34), **characterized in that** a plurality of spaced-apart contact surfaces (60a - 60d) are formed on the retaining region (36), and **in that** the retaining element (54) is prestressed in the direction of the contact surfaces (60a - 60d) and can engage with one of the contact surfaces (60a - 60d) in dependence on the respective position in which the retaining region (36) is installed.

2. Plug-on arrangement according to Claim 1, **characterized in that** the retaining device (20) contains a front side which is directed towards a rear region (50) of the retaining region (36), and the retaining element (54) is prestressed against the rear region (50).

3. Plug-on arrangement according to Claim 2, **characterized in that** the contact surfaces (60a - 60d) are integral with the rear region (50) of the retaining region (36).

4. Plug-on arrangement according to one of the preceding claims, **characterized in that** the retaining region (36) has a shape which forms a wedge fit between the retaining region (36) and the retaining device (20), it being the case that the contact surfaces (60a - 60d) contain a temporary contact surface (60d) in order for the soil-working tool (30) to be retained in the retaining device (20) in a temporary, initial plug-on position which is offset from the installed position, and that forces which act on the soil-working tool (30) during field work move the soil-working tool (30) out of the initial plug-on position into a wedged state, in which case the soil-working tool (30) can be installed irrespective of the use of installation tools.

5. Plug-on arrangement according to one of the preceding claims, **characterized in that** the retaining device (20) and the retaining region (36) define an introduction region (82, 90) for the introduction of a tool between the retaining device (20) and retaining region (36) in order to force the retaining element (54) counter to the prestressing and release the soil-working tool (30) from the installed position.

6. Plug-on arrangement according to one of the preceding claims, **characterized in that** the retaining region (36) contains an elevated region (70) which is formed behind the contact surfaces (60a - 60d), as seen in the direction of the soil-penetration side of the soil-working tool (30), in order to limit the wear in the region of the contact surfaces (60a - 60d).

7. Plug-on arrangement according to one of the preceding Claims 2 to 7, **characterized in that** the rear region (50) contains a concealed groove region which is located opposite the retaining element (54) and in which the contact surfaces (60a - 60d) are formed.

## Revendications

1. Arrangement de montage pour un outil de travail du sol (30), en particulier pour un soc de charrue, avec un dispositif de support (20) pour l'outil de travail du sol (30), une zone de support (36) pouvant être appliquée sur le dispositif de support (20) pour l'outil de travail du sol (30), dans lequel le dispositif de support (20) offre un appui fixe mais détachable lorsque la zone de support (36) se trouve dans une position montée sur le dispositif de support (20) et la position montée, dans laquelle la zone de support (36) est montée, peut varier en raison de tolérances sur le dispositif de support (20) et sur la zone de support (36), et avec un arrangement de fixation (40) destiné à éviter un desserrage de la zone de support (36) par rapport au dispositif de support (20), qui présente un élément de maintien précontraint (54), **caractérisé en ce que** plusieurs surfaces de contact (60a - 60d) sont formées sur la zone de support (36), et **en ce que** l'élément de maintien (54) est précontraint en direction des surfaces de contact (60a - 60d) et peut venir en prise avec une des surfaces de contact (60a - 60d) en fonction de la position respective dans laquelle la zone de support (36) est montée.

2. Arrangement de montage selon la revendication 1, **caractérisé en ce que** le dispositif de support (20) comporte une face avant, qui est tournée vers une zone arrière (50) de la zone de support (36) et l'élément de support (54) est précontraint contre la zone arrière (50).

3. Arrangement de montage selon la revendication 2, **caractérisé en ce que** les surfaces de contact (60a - 60d) sont d'un seul tenant avec la zone arrière (50) de la zone de support (36).

4. Arrangement de montage selon l'une quelconque des revendications précédentes, **caractérisé en ce que** la zone de support (36) présente une forme qui crée un appui incliné entre la zone de support (36) et le dispositif de support (20), dans lequel les surfaces de contact (60a - 60d) comportent une surface de contact provisoire (60d), afin de maintenir l'outil de travail du sol (30) dans le dispositif de support (20) dans une position de montage initiale provisoire, décalée par rapport à la position montée, dans lequel des forces, qui agissent sur l'outil de travail du sol (30) pendant le travail agricole, amènent l'outil de travail du sol (30) de la position de montage initiale à une position inclinée, de telle manière que le montage de l'outil de travail du sol (30) puisse être réalisé indépendamment de l'emploi d'outils de montage.

5. Arrangement de montage selon l'une quelconque des revendications précédentes, **caractérisé en ce que** le dispositif de support (20) et la zone de support (36) définissent une zone d'introduction (82, 90) permettant d'introduire un outil entre le dispositif de support (20) et la zone de support (36) pour pousser l'élément de maintien (54) contre la précontrainte et libérer l'outil de travail du sol (30) de la position montée.

6. Arrangement de montage selon l'une quelconque des revendications précédentes, **caractérisé en ce que** la zone de support (36) comporte une zone surélevée (70), qui est formée derrière les surfaces de contact (60a - 60d) en direction du côté de pénétration dans le sol de l'outil de travail du sol (30), afin de limiter l'usure dans la région des surfaces de contact (60a - 60d).

7. Arrangement de montage selon l'une quelconque des revendications 2 à 7, **caractérisé en ce que** la zone arrière (50) présente une zone de rainure masquée, qui est située en face de l'élément de maintien (54) et dans laquelle les surfaces de contact (60a - 60d) sont formées.
